# EUROPEAN PATENT APPLICATION

(11) **EP 3 587 106 A1**
(43) Date of publication of application: **01.01.2020**
(21) Application number: 18179917.2
(22) Date of filing: 26.06.2018
(51) Int. Cl.: B32B 17/10, C08J 5/18, C09D 129/14

(54) **PLASTICISER-FREE POLYVINYL BUTYRAL DISPERSION**

(71) Applicant: Aquaspersions Ltd., Halifax, Yorkshire HX3 6AQ (GB)
(72) Inventor: The designation of the inventor has not yet been filed
(74) Representative: Browne, Robin Forsythe

(57) **Abstract**

A method of manufacture of a polyvinyl butyral film comprising the steps of preparing an aqueous dispersion consisting of:
one or more particulate polyvinyl butyral polymers;
a coalescent agent;
water;
an optional cross linking agent, and
optional further additives;
forming the dispersion into a laminar configuration;
allowing the coalescent agent to vaporise to form a laminar residue, and
allowing the residue to coalesce to form a film.

## Description

This invention relates to a method of manufacture of polyvinyl butyral films and films made by the method. The invention also relates to uses of the films and products containing such films.

Polyvinyl butyral (PVB) is a versatile polymer that has been manufactured since the 1930s. PVB has excellent optical clarity, strong binding, toughness, flexibility and adheres well to a number of substrates. Due to this combination of properties, PVB is used as a laminating material in non-shatterable automotive and architectural glass. PVB resins are widely used as a major component in the following applications: stoving enamels, ceramic binders, wood coatings, wash primers, structural adhesives and printing inks.

Various polyvinyl butyral resins are commercially available, such as those sold under the trade marks MOWITAL from Kuraray Europe GmbH and BUTVAR from Solutia.

Most PVB extruded without a carrier is used for applications such as car windscreens.

Where coatings are needed, PVB has been dissolved in a volatile organic solvent, together with small amounts of other additives and then applied as a solvent solution. A typical application is for anti-corrosive primers for metals.

Where the coatings need to be water-based, the only products commercially available are dispersions of PVB and a plasticiser. These dispersions are useful for coating and binding applications that take advantage of the fact that they form a film as the water evaporates at room temperature. These films have good release properties from substrates such as metal and glass.

Water-based PVB dispersions are not suitable for all applications, for example anti-corrosive primers which require the dried coating to be uncontaminated by any plasticiser and also require it to adhere well to a metal substrate. The plasticiser, typically a castor oil or a derivative thereof, is not volatile and therefore remains to give a plasticised PVB coating which is too soft for this application and gives poor adhesion. A further disadvantage of residual plasticisers in other applications is that they are relatively mobile compared to the PVB polymer and can leach out of a coating.

There is a need for a water-based PVB dispersion which does not contain a residual plasticiser. This is quite difficult to achieve since the PVB dispersion production process involves stirring or shearing of molten PVB. Without using a plasticiser as a diluent, it is almost impossible to melt and stir the PVB resin at normal operating temperatures below which there is no destabilisation or colouration of the PVB resin. A further technical problem is that a dispersion solely of PVB, even if it could be manufactured, would not form a film at room temperature due to the relatively high glass transition temperature, Tg of PVB

According to a first aspect of the present invention there is provided a method of manufacture of a polyvinyl butyral film comprising the steps of:
preparing an aqueous dispersion consisting of:
one or more particulate polyvinyl butyral polymers;
a coalescent agent;
water;
an optional cross linking agent, and
optional further additives;
forming the dispersion into a laminar configuration;
allowing the coalescent agent to vaporise to form a laminar residue, and
allowing the residue to coalesce to form a film.

The dispersion is preferably an aqueous dispersion comprising the polymer and coalescent agent in the substantial or complete absence of a plasticiser or organic solvent.

A film in accordance with this invention may comprise any structure in which the polymer particles have coalesced to form a substantially continuous configuration, for example a laminar or sheet-like structure with opposed generally flat surfaces. Alternatively one or both of the surfaces may be shaped by casting into a contoured mould, calendaring or pressing using a heated roller or press during the vaporisation or cross linking step.

The present invention utilises a volatile organic compound for the coalescent agent in combination with the PVB resin. This addition of a coalescent agent may reduce the process viscosity of the molten PVB to a level which works well with the PVB dispersion process and also which plasticises the PVB sufficiently well that the dispersion is able to form a film at room temperature or below. During the drying process the coalescent agent evaporates together with the water to leave a film composed almost entirely of PVB resin. This film exhibits properties similar to those of pure extruded PVB film, having a high degree of toughness and resistance. The film is therefore useful for other applications such as metal anti-corrosive coatings.

According to a second aspect of the present invention, there is provided a polyvinyl butyral film manufactured in accordance with the method of the first aspect of this invention.

Films of the present invention find particular application as paints or coatings, particularly for priming wood or metallic surfaces. For wood surfaces the films provide excellent protection against penetration by wood resin and prevention of stain formation. For metallic surfaces the films form a seal preventing penetration of corrosion products.

In certain embodiments the composition may further comprise a cross linking agent.

In certain embodiments, for example for applications requiring a high degree of resistance to water, solvent or other chemicals, or for use in a particular environment, the PVB dispersion may include one or more latent cross-linking agents to produce a single component cross-linking system. Various types of cross-linking agents may be employed. A single component cross-linking agent may serve to cross-link any residual PVB hydroxyl functionality. This may be triggered either by the drying process or by heating of the coating towards the end of the drying process or afterwards. The one component systems may be storage stable and can be stored for long periods prior to activation by drying or heating.

In an alternative embodiment a two component system may comprise a PVB dispersion and an active cross-linker which may be added to the PVB dispersion immediately before use. The ensuing chemical reaction may provide cross-linking, although the mixture may have a limited pot life.

Some applications may require some slight residual plasticisation of the PVB film and to achieve this some embodiments may include a small amount of a non-volatile plasticiser in the composition of the present invention, the plasticiser remaining in the film after drying to give slightly softer properties.

Polyvinyl butyral may be prepared from polyvinyl alcohol by reaction with butyraldehyde. The resultant polymer may contain, depending on conditions and concentrations of the reactants, a varying amount of acetate, hydroxyl and acetal groups. In some embodiments polyvinyl butyral with between 10% and 30% hydroxyl groups and between 1% and 8% acetate groups by weight can be used with the balance substantially comprising butyraldehyde acetal. In preferred embodiments of the present invention the polyvinyl butyral contains between about 18wt% and about 21wt% hydroxyl groups and between about 1wt% to about 4wt% acetate groups, with the balance being substantially butyraldehyde acetal.

Polyvinyl butyrals which are commercially available may have a widely varying degree of polymerisation and thus have varying solution viscosities. In some embodiments polyvinyl butyral with a solution viscosity (10% in ethanol) of between about 15 and about 350 mPas can be used. In exemplary embodiments of the present invention polyvinyl butyral with a solution viscosity of between about 20 and about 30mPas is used.

In an exemplary embodiment a single polyvinyl butyral polymer is employed.

In an alternative embodiment two or more polyvinyl butyral polymers may be used. A blend may be prepared by co-extrusion. Alternatively a blend may comprise a mixture of particles of two or more polyvinyl butyral polymers having different molecular weights, the particles being mixed before use so that the resultant coalesced film exhibits the physical properties of a blend.

The method provides a convenient way of making a composite or blended polymer without the need for a separate co-extrusion or other blending step. Hitherto unobtainable composite structures may be provided which exhibit a combination of properties of the constituent polymers.

When a cross-linking agent is employed the method may further comprise the step of allowing the residue to cure to form a cross linked film.

According to a second aspect of the invention there is provided a polyvinyl butyral film comprising coalesced particles in the absence of a plasticiser and having a PVB content of at least 95wt%, preferably at least 96wt%.

The film may be cast to a thickness of about 5 to about 30 µm, preferably about 10 to about 15 µm or any convenient thickness. The film is preferably strongly adherent to the substrate. The degree of adherence may be determined by the test method set out below in this specification. The film in accordance with this invention have the inherent adhesive properties of pure PVB. Such properties may be contrasted with the poor adhesion exhibited by PBV films which contain a plasticisers.

Where a plasticiser is required a non-volatile plasticiser, for example, castor oil for example in an amount of 5wt% may be used to give a softer film.

The film may have good mechanical strength and may be crosslinked to form a stronger film dependent on the required application.

The present invention allows formation of a plasticiser free PBV film from an aqueous system without the need for an organic solvent.

The coalescent agent may comprise one or more organic compounds which do not react with the polymer and which are liquid at ambient or processing temperature but which have a boiling point greater than 100°C but below 200°C.

A coalescing agent which may be employed may be a high boiling point solvent relative to the boiling point of water and selected so that is vapourised with or after the evaporation of water from a polymer emulsion. The coalescent agent may soften the polymer/latex particles, enabling them to fuse into a continuous film. A coalescing agent may serve as a temporary plasticizer for a film-forming polymer. The function of the coalescing agent is to soften the polymer during the period of fusion so that the individual particles will combine to form a continuous film. The coalescing agent should then slowly evaporate, preferably allowing the film to develop maximum durability and appearance properties. An ideal coalescing agent should fulfil three criteria. First, the coalescent must be an active solvent for the base polymer of the system. The coalescing agent should efficiently lower the minimum film forming temperature (MFFT) of the system. Further, a coalescent agent should have an evaporation rate which is much lower than that of water.

Suitable coalescing agents are selected from: benzoic acid alkyl esters, ester-alcohols, glycol-ether solvents, long-chain aliphatic alcohols, aromatic alcohols and mixtures thereof.

Examples of preferred benzoic acid alkyl esters which may be used include: decyl or isodecyl benzoate, nonyl or isononyl benzoate, octyl or isooctyl benzoate, 2- ethylhexyl benzoate, tridecyl or isotridecyl benzoate, 3,7-dimethyloctyl benzoate, 3,5,5-trimethylhexyl benzoate, and mixtures thereof. Commercial examples of such benzoic acid alkyl esters include isodecyl benzoate, available under the trade mark BENZOFLEX from Eastman Chemical Company and 2-ethylhexyl benzoate, available under the trade mark VELATE 368 from Eastman Chemical Company.

Examples of ester-alcohol coalescent agents which may be employed are hydroxyalkyl esters of alkanoic acids where the alkyl groups, which can be straight or branched, substituted or unsubstituted, independently have from 2 to 30 carbon atoms, such as 2,2,4-trimethylpentane- 1,3-diol monoisobutyrate. Commercial examples of such ester-alcohols include 2,2,4-trimethyl-1,3-pentanediol monoisobutyrate, available under the trade mark TEXANOL from Eastman.

Examples of glycol-ether type coalescent agents which may be employed are selected from: diethylene glycol monomethylether acetate, diethylene glycol monobutylether acetate, butyl carbitol acetate (BCA). Specific commercial examples of such glycol-ether include butyl ethylene glycol monobutyl ether, available under the trade mark CELLOSOLVE from Dow Chemical and dipropylene glycol n-butyl Ether available under the trade mark DOWANOL PnB from Dow Chemical

Examples of long-chain aliphatic alcohols which may be employed include those where the alkyl group is from 5 to 20 carbon atoms, such as ethylhexanol, octanol and dodecanol.

Examples of aromatic alcohols which may be employed include benzyl alcohol and phenol.

Preferred coalescing agents exhibit one or more advantageous properties.

A first preferred property of a coalescing agent is compatibility with the base polymer. For example in the case of 2,2,4-trimethyl-1,3-pentanediol monoisobutyrate TEXANOL, this contains both hydroxyl and ester functional groups and compatible with PVB resin.

An effective coalescing agent should have a rate of evaporation significantly slower than water in any drying conditions likely to be encountered when carrying out the method. Solvents with higher boiling points greater than 100°C may be more suitable as coalescing agents. Solvents with a lower boiling point may evaporate from the film too quickly before the coating has had time to achieve proper film formation. An advantage of the present invention is that the coalescent agent evaporates from the film, in contrast to a conventional plasticiser so that the properties of the film are not impeded by the presence of the coalescing agent.

The amount of coalescing agent may be from about 2wt% to about 20wt% of the emulsion alternatively about 8wt% to about 16wt%

A surfactant may be provided to enhance coalescence. Exemplary surfactants are polymeric type block copolymers in which the central polypropylene glycol group is flanked by two polyethylene glycol groups or fatty alcohol ethoxylates, with a 16 - 18 carbon chain length and with 25 to 80 degree of ethoxylation.
The particles of the polymer dispersion may have a dimension in the range of 0.1 to 10µm and for example 2 to 8, typically 3 to 5µm

A crosslinking agent when used may be selected from blocked isocyanates, melamines, sodium tetraborate and mixtures thereof. Optional further ingredients which may be employed include: water based biocidal agents, natural thickeners such as xanthan gum, cellulose ether, carboxy methyl cellulose, guar, polysaccharides. Also associative thickeners such fully hydrolysed polyacrylic acid, polyurethane (HEUR) and HASE thickeners can be incorporated to control rheology, sedimentation and storage stability.

Percentages or other quantities referred to in this specification are by weight unless indicated otherwise and are selected from any of the ranges quoted to total 100%.

The invention is further described by means of example, but not in any limitative sense.

### Example 1a

The following formulation was used:

| Trade Name | Chemical name | Wt (kg) |
|---|---|---|
| MOWITAL B20H | Polyvinyl butyral | 32.78 |
| TEXANOL | | 12.22 |
| Antioxidant 1076 | Octadecyl-3-(3,5-di-tert-butyl-4-hydroxyphenyl) propionate | 0.5 |
| | Initial Water (20°C) | 12 |
| PLURONIC 6800 | | 5 |
| | Hot Water (90°C) | 30.3 |
| ACTICIDE MBL | Mixture of 2-methyl-4-isothiazolin-3-one, 1,2-benzisothiazolin -3-one, and 2-bromo-2-nitropropane-1,3-diol | 0.2 |
| | 1% xanthan gum solution | 7 |
| **Total** | | **100** |

The following process was employed:-

Polyvinyl butyral (Mowital B20H), the coalescent agent (TEXANOL) and initial water were added to a high pressure reactor. The mixture was stirred for 60 min at 300rpm. Antioxidant 1076 and surfactant (Pluronic PE6800) were added and the reactor lid was closed. The reactor was heated to 120°C. When the internal temperature reached 100°C the stirrer was started and the rate of stirring was gradually increased to 300rpm. When the temperature reached 120°C the heating was stopped and stirring was continued for 60 min. The remaining water was gradually added over a 30 min period after which the reactor was cooled to below 100°C and the pressure released. The reactor was allowed to cool to 40°C at which temperature the Acticide MBL and xanthan gum solution were added. The resultant composition had the following properties:
QC Results:
Total solids 38.19%
Viscosity (Brookfield RV sp 4, sp 20), 750cp
pH: 4.8
Particle size (d95%), 3649 µm.

### Example 1b

### Example 1a was modified using the following formulation, including a low temperature cross-linking agent (Imprafix 2794):

| | wt (kg) |
|---|---|
| Example 1a | 91.87 |
| Imprafix 2794 | 8.13 |
| Total | 100 |

The resultant composition had the following properties:
QC Results:
Total solids: 37.9%
Viscosity (Brookfield RV sp 4, sp 20), 510 cp
pH: 7.02
Particle size (d95%), 3415µm

### Example 2a

The following formulation was used:

| Trade Name | Chemical name | Wt (kg) |
|---|---|---|
| Mowital B20H | Polyvinyl butyral | 32.78 |
| Texanol | | 12.22 |
| Antioxidant 1076 | Octadecyl-3-(3,5-di-tert-butyl-4-hydroxyphenyl) propionate | 0.5 |
| | Initial Water (20°C) | 12 |
| Lutensol AT80 | | 2 |
| Lutensol AT25 | | 0.7 |
| | Hot Water (90°C) | 38.1 |
| Acticide MBL | Mixture of 2-methyl-4-isothiazolin-3-one, 1,2-benzisothiazolin -3-one, and 2-bromo-2-nitro-propane-1,3-diol | 0.2 |
| | 1% xanthan gum solution | 7 |
| **Total** | | **100** |

The following process was employed

Polyvinyl butyral (Mowital B20H), the coalescent agent (TEXANOL) and initial water were added to a high pressure reactor. The mixture was stirred for 60 min at 300rpm. Antioxidant 1076 and surfactants (Lutensol AT80, Lutensol AT25) were added and the reactor lid was closed. The reactor was heated to 120°C. When the internal temperature reached 100°C the stirrer was started and the rate of stirring was gradually increased to 300rpm. When the temperature reached 120°C the heating was stopped and stirring was continued for 60 min. The remaining water was gradually added over a 30 min period after which the reactor was cooled to below 100°C and the pressure released. The reactor was allowed to cool to 40°C at which temperature the Acticide MBL and xanthan gum solution were added. The resultant composition had the following properties:
QC Results:
Total solids, %: 36.12
Viscosity (Brookfield RV spindle 4, speed 20), 500cps.
pH: 6.34
Particle size (d95%), 2.599µm.

### Example 2b

### Example 2a was modified using the following formulation, including the low temperature cross-linking agent, Imprafix 2794.:

| | wt (kg) |
|---|---|
| Example 2a | 91.87 |
| Imprafix 2794 | 8.13 |
| Total | 100 |

The resultant composition had the following properties:
QC Results:
Total solids 35.75%
Viscosity (Brookfield RV spindle 4, speed 20), 800 cps
pH: 8.04
Particle size (d95%), 2.687 µm

### Examples 1 and 2 - Test Results

### Methods

1. Films were coated on aluminium at 150 wet thickness.
2. Films were allowed to dry at room temperature (21-23°C) for either 24 or 72 hours.
3. If stoving, the films were placed in a preheated oven at 120-125°C for 1 hour after 23 or 71 hours drying at room temperature.
4. After drying the films were then tested using one of the methods below.

### Adhesion Test Method

The films were tested using the cross hatch method. A grid was formed by cutting in to the film vertically and then horizontals across the vertical cuts. This produced a grid and the loss of squares from the grid determined the adhesion rating. Firstly the grid iwa brushed, rating recorded and then Scotch tape was applied to the surface and removed. It was then rated again.

Ratings: 0=smooth lines, no square loss. 1=up to 5 squares lost, none smooth lines. 2=5-15 squares lost. 3=15-35 squares lost. 4=35-65 squares lost. 5=65+ squares lost.

| | | 24 Hours | | 72 Hours | |
|---|---|---|---|---|---|
| **Sample** | **Drying conditions** | **Brush** | **Tape** | **Brush** | **Tape** |
| **Example 1** | RT | 2 | 3 | 5 | 5 |
| **Example 1** | 120'C | 0 | 0 | 0 | 0 |
| **Example 1a** | 120'C | 0 | 0 | 0 | 0 |
| **Example 2** | RT | 0/1 | 1 | 0/1 | 0/1 |
| **Example 2** | 120'C | 0 | 0 | 0 | 0 |
| **Example 2a** | 120'C | 0 | 0 | 0 | 0 |

### Solvent Resistance Test Method

A cotton wool ball iwa dipped in acetone, placed in a glass jar and the jar was turned upside down on top of the film. The cotton wool and film were in contact. After 1 hour the cotton wool and glass jar were removed. Damage to and appearance of the films was noted. These were then ranked from 1 - 3 (1=most resistant, 3=least resistant)

**24 Hour results:**

| **Sample** | **Drying conditions** | **Rank** | **Tacky** | **Film appearance** |
|---|---|---|---|---|
| **Example 1** | RT | 3 | Initially. Not once dry. | Thinned film. Clear damage |
| **Example 1** | 120'C | 2 | Initially. Not once dry. | As above but less damage |
| **Example 1a** | 120'C | 1 | Initially. Not once dry. | Barely noticeable damage |
| **Example 2** | RT | 3 | Initially. Not once dry. | Thinned film. Clear damage |
| **Example 2** | 120'C | 2 | Initially. Not once dry. | As above but less damage |
| **Example 2a** | 120'C | 1 | Initially. Not once dry. | Barely noticeable damage |

**72 Hour results:**

| **Sample** | **Drying conditions** | **Rank** | **Tacky** | **Film appearance** |
|---|---|---|---|---|
| **Example 1** | RT | 3 | Initially. Not once dry. | Thinned film. Clear damage |
| **Example 1** | 120'C | 2 | Initially. Not once dry. | As above but less damage |
| **Example 1a** | 120'C | 1 | Initially. Not once dry. | Barely noticeable damage |
| **Example 2** | RT | 3 | Initially. Not once dry. | Thinned film. Clear damage |
| **Example 2** | 120'C | 2 | Initially. Not once dry. | As above but less damage |
| **Example 2a** | 120'C | 1 | Initially. Not once dry. | Barely noticeable damage |

### Water resistance - water spot test method

A large drop of water is added with a pipette onto each of the dried films. Observations were then made over a 90 minute period, noting the time to start whitening, time for complete whitening, and loss of adhesion to the substrate. Each film was given a dry rating (0= no visible change to film, 1= v v slight water mark, 3=obvious water mark, 4=white, 5=White, redispersed or flaky).

**24 Hour results:**

| **Sample** | **Drying conditions** | **Start Whitening (mins)** | **Full Whitening (mins)** | **Loss of Adhesion** | **Comment** | **Dry Rating** |
|---|---|---|---|---|---|---|
| **Example 1** | RT | <1* | <60* | <60mins | Film bubbled. Film swelled. Adhesion lost | 1 |
| **Example 1** | 120'C | No change | No change | No change | Film remained unchanged | 0 |
| **Example 1a** | 120'C | No change | No change | No change | Film remained unchanged | 0 |
| **Example 2** | RT | <10*** | <60** | No change | No adhesion loss. White water mark. Film integrity good. | 0 |
| **Example 2** | 120'C | No change | No change | No change | Film remained unchanged | 0 |
| **Example 2a** | 120'C | No change | No change | No change | Film remained unchanged | 0 |

| | | | | | | |
|---|---|---|---|---|---|---|
| *spots, **not fully saturated but quite blue, ***very slight blue tint. | | | | | | |

**72 Hour results:**

| **Sample** | **Drying conditions** | **Start Whitening (mins)** | **Full Whitening (mins)** | **Loss of Adhesion** | **Comment** | **Dry Rating** |
|---|---|---|---|---|---|---|
| | RT | <1* | <9* | <90 | Film bubbled. | 2 |
| | | | | | Film swelled. | |
| **Example 1** | | | | | Adhesion lost | |
| **Example 1** | 120'C | No change | No change | No change | | 0 |
| **Example 1a** | 120'C | No change | No change | No change | | 0 |
| **Example 2** | RT | <11*** | <90** | No change | No adhesion loss. White water mark. Film integrity good. | 0 |
| **Example 2** | 120'C | No change | No change | No change | | 0 |
| **Example 2a** | 120'C | No change | No change | No change | | 0 |

| | | | | | | |
|---|---|---|---|---|---|---|
| *spots, **not fully saturated but quite blue, ***very slight blue tint. | | | | | | |

## Claims

1. A method of manufacture of a polyvinyl butyral film comprising the steps of preparing an aqueous dispersion consisting of:
one or more particulate polyvinyl butyral polymers;
a coalescent agent;
water;
an optional cross linking agent, and
optional further additives;
forming the dispersion into a laminar configuration;
allowing the coalescent agent to vaporise to form a laminar residue, and
allowing the residue to coalesce to form a film.

2. A method as claimed in claim 1, wherein the dispersion does not contain a plasticiser or organic solvent.

3. A method as claimed in claim 1 or 2, wherein the polyvinyl butyral contains between 18wt% and 21wt% hydroxyl groups and between 1wt% and 4wt% acetate groups.

4. A method as claimed in any preceding claim, wherein the polymer is a single polyvinyl butyral polymer.

5. A method as claimed in any of claims 1 to 3, wherein the polymer is a mixture of two or more polyvinyl butyral polymers.

6. A method as claimed in any preceding claim, wherein the aqueous dispersion includes a cross-linking agent. The method further comprising the step of allowing the residue to cure to form a cross-linked film.

7. A method as claimed in any preceding claim, wherein the coalescent agent comprises one or more organic compounds having a boiling point between 100°C and 200°C.

8. A method as claimed in claim 7, wherein the coalescent agent is selected from the group consisting of benzoic acid alkyl esters, ester-alcohols, glycol-ether solvents, long-chain aliphatic alcohols, aromatic alcohols and mixtures thereof.

9. A method as claimed in claim 8, wherein the coalescent agent is selected from the group consisting of decyl or isodecyl benzoate, nonyl or isononyl benzoate, octyl or isooctyl benzoate, 2- ethylhexyl benzoate, tridecyl or isotridecyl benzoate, 3,7-dimethyloctyl benzoate, 3,5,5-trimethylhexyl benzoate, and mixtures thereof.

10. A method as claimed in claim 8, wherein the coalescent agent is selected from the group consisting of hydroxyalkyl esters of alkoanic acids wherein the alkyl group is straight or branched, substituted or unsubstituted, and having 2 to 30 carbon atoms.

11. A method as claimed in claim 8, wherein the glycol ether coalescent agents are selected from the group consisting of diethylene glycol monomethylether acetate, diethylene glycol monobutylether acetate, butyl carbitol acetate.

12. A method as claimed in any preceding claim, wherein the amount of coalescent agent is from 2 wt% to 20 wt% of the emulsion.

13. A polyvinyl butyral film comprising coalesced polyvinyl butyral particles in the absence of a plasticiser and having a polyvinyl butyral content of at least 95wt%,.

14. A polybutyral film as claimed in claim 13, having a polyvinyl butyral content ofat least 96wt%.

15. A polyvinyl butyral film as claimed in claim 14, manufactured by the method of any of claims 1 to 13.
